(19) Europäisches Patentamt
European Patent Office
Office européen des brevets

(11) EP 4 230 777 A1

(12) **EUROPEAN PATENT APPLICATION**
published in accordance with Art. 153(4) EPC

(43) Date of publication:
**23.08.2023 Bulletin 2023/34**

(21) Application number: **21883133.7**

(22) Date of filing: **15.10.2021**

(51) International Patent Classification (IPC):
***D01F 6/62*** $^{(2006.01)}$ ***D01F 1/10*** $^{(2006.01)}$
***D04H 1/55*** $^{(2012.01)}$

(52) Cooperative Patent Classification (CPC):
**D01F 1/10; D01F 6/62; D04H 1/55**

(86) International application number:
**PCT/KR2021/014312**

(87) International publication number:
**WO 2022/086062 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.10.2020 KR 20200134999**

(71) Applicant: **Toray Advanced Materials Korea Inc.**
**Gumi-si, Gyeongsangbuk-do 39389 (KR)**

(72) Inventor: **LEE, Hwi Dong**
**Gumi-si, Gyeongsangbuk-do 39389 (KR)**

(74) Representative: **Maiwald GmbH**
**Engineering**
**Elisenhof**
**Elisenstrasse 3**
**80335 München (DE)**

(54) **POLYESTER STAPLE YARN FOR WET NON-WOVEN FABRIC, WET NON-WOVEN FABRIC COMPRISING SAME, AND PREPARATION METHOD THEREFOR**

(57) The present invention relates to a polyester staple yarn for a wet non-woven fabric, and a wet non-woven fabric including the same, wherein the polyester staple yarn is manufactured by using a polymerization catalyst including a titanium-based compound. The polyester staple yarn is superb in terms of dispersibility due to the remarkably low defect formation thereof, and thus, the present invention can provide a wet non-woven fabric having excellent mechanical strength, and a manufacturing method therefor.

EP 4 230 777 A1

## Description

[Technical Field]

The present invention relates to a polyester staple yarn for a wet non-woven fabric, a wet non-woven fabric including the same and a manufacturing method therefor.

[Background Art]

Because of its excellent mechanical properties, chemical stability and high melting point, polyester is not only the most widely used synthetic fiber material today, but also a commercially important polymer material that is used as a material for various plastic products. Many studies are being conducted to expand the application range of PET, and particularly, attempts to improve various properties and enhance productivity by synthesizing PET having a high degree of polymerization and a low carboxyl group content in a shorter period of time are being continuously studied.

Meanwhile, the polyester resin, for example, undergoes an esterification reaction and a melt polycondensation reaction, and in the polycondensation reaction, generally, antimony compounds or germanium compounds are mostly used as polymerization catalysts on an industrial scale. However, the polyester resin prepared by using an antimony compound as a polymerization catalyst has a characteristic black color, and there are problems in terms of safety and hygiene and environmental considerations based on the toxicity which has been pointed out for antimony compounds. In addition, although the polyester resin using a germanium compound as a catalyst is suitable in terms of transparency and safety and hygiene, the germanium compound itself is very expensive and economically disadvantageous, and thus, the development of a polycondensation catalyst replacing the same is strongly desired.

In order to solve the above-described problems, numerous compounds have been proposed in the related art as catalysts in place of antimony compounds or germanium compounds, and among these, various types of titanium compounds have been proposed because they are inexpensive, and there is no problem in terms of safety and hygiene. However, the polyester resin prepared by using a titanium compound as a polymerization catalyst has a characteristic yellow color and has poor thermal stability such that during polycondensation and melt molding, it has defects in that a large amount of acetaldehyde derived from the decomposition reaction is produced as a by-product.

Particularly, in the case of a wet non-woven fabric, it is used as a component of a water purifier filter or a food filter for tea bags, and in polyester fibers manufactured by using an antimony catalyst and a wet non-woven fabric manufactured therefrom, antimony can be eluted in drinking water, and thus, they are not suitable in terms of safety and hygiene.

As an example thereof, Japanese Registered Patent No. 2002-194618 discloses a fiber for a non-woven fabric manufactured by using an antimony catalyst. However, as described above, when the non-woven fabric is used in a wet non-woven fabric, there is a problem in that it is not suitable for safety and hygiene.

Meanwhile, the polyester fiber prepared by using a titanium-based compound is not suitable as a non-woven fabric for papermaking and filter use, because it forms defects when it is dispersed in water due to poor spinnability.

Further, in the case of polyester fibers having a fine denier, there are many cases of poor spinning due to the characteristics of a low spinning discharge amount and a high stretching ratio, and thus, there are also problems in that the physical properties of a wet non-woven fabric including the same are poor, and research thereon is urgently needed.

[Disclosure]

[Technical Problem]

The present invention for solving the above problems is directed to providing a polyester staple yarn for a wet non-woven fabric by using a titanium-based compound as a polymerization catalyst, a wet non-woven fabric including the same and a manufacturing method therefor.

[Technical Solution]

The polyester staple yarn for a wet non-woven fabric according to the present invention may have a fineness of 0.3 to 3.0 de (denier).

In a preferred exemplary embodiment of the present invention, the polyester staple yarn may have a dispersibility of 10 ppm or less as measured by Relationship Formula 1 below:

[Relationship Formula 1]

$$\text{Dispersibility}(ppm) = \frac{\text{Number of undispersed fibers}(ca)}{\text{Total number of fibers}(ca)} \times 10^6$$

wherein in Relationship Formula 1 above, the number of undispersed fibers is determined by adding 3 g of a polyester staple yarn for a wet non-woven fabric having a moisture content of 25 wt.% to 1 L of water at a temperature of 25°C, stirring for 10 minutes under the condition of 600 rpm, leaving for 1 minute and then measuring the number of undispersed fibers.

In a preferred exemplary embodiment of the present invention, the polyester staple yarn may include a spinning material in which a polymerization product is spun, and wherein the polymerization product may be a reaction product obtained by polymerization of an ester reaction product, and the ester reaction product may be a reaction product obtained by reacting a mixture including an ester reaction product, a thermal stabilizer and a titanium-based compound represented by Chemical Formula 1 below:

[Chemical Formula 1]

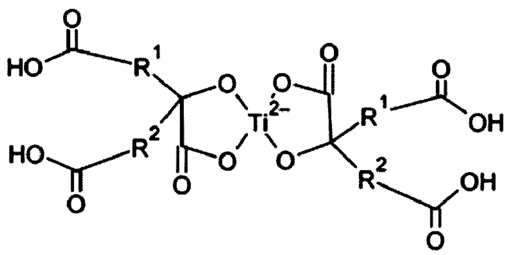

wherein in Chemical Formula 1 above, $R^1$ and $R^2$ are each independently a straight-chain alkylene group having 1 to 5 carbon atoms or a branched alkylene group having 3 to 5 carbon atoms.

In a preferred exemplary embodiment of the present invention, the polyester staple yarn may have an average fiber length of 3 to 12 mm.

As another object of the present invention, a wet non-woven fabric may include the polyester staple yarn for a non-woven fabric; and a binder staple yarn,

In a preferred exemplary embodiment of the present invention, the binder staple yarn and the polyester staple yarn may be included at a weight ratio of 1 : 1.20 to 1 : 1.90.

In a preferred exemplary embodiment of the present invention, the wet nonwoven fabric may have an MD (machine direction) tensile strength of 150 to 300 N/15 mm.

In a preferred exemplary embodiment of the present invention, the standard deviation of the MD (machine direction) tensile strengths of the wet non-woven fabric may satisfy Relationship Formula 2 below:

[Relationship Formula 2]

$$0.05N/15mm < \sqrt{\frac{\sum_{i=1}^{n}(l_i-\mu)^2}{N}} \leq 1.0N/15mm$$

wherein in Relationship Formula 2 above, N is the number of regions obtained by dividing a specimen obtained by cutting the wet non-woven fabric by 150 mm × 100 mm into N equal parts, N = 10, $l_i$ is the MD tensile strength of the central part of the $i^{th}$ region, and $\mu$ is the average value of MD tensile strengths of the region divided into N equal parts, and $\mu = \frac{1}{N}\sum_{i=1}^{n} l_i$.

In a preferred exemplary embodiment of the present invention, the binder staple yarn may have a fineness of 0.3 to 3.0 de and an average fiber length of 3 to 12 mm.

As still another object of the present invention, the method for manufacturing a wet non-woven fabric may include Step 1 of manufacturing a handsheet by mixing a polyester staple yarn for a wet non-woven fabric and a binder staple yarn; Step 2 of manufacturing a paper sheet by drying the handsheet; and Step 3 of manufacturing a wet non-woven fabric by performing calendaring by applying at least one selected from heat and pressure to the paper sheet.

In a preferred exemplary embodiment of the present invention, the polyester staple yarn may be manufactured by including Step 1-1 of obtaining an ester reaction product by reacting an acid component and a diol component; Step 1-2 of preparing a polyester resin by mixing and reacting polymerization reactants including the ester reaction product, a heat stabilizer and a titanium-based compound; Step 1-3 of preparing a spinning material by spinning the polyester resin; and Step 1-4 of manufacturing a polyester staple yarn by stretching the spinning material.

In a preferred exemplary embodiment of the present invention, the temperature may be increased to a final temperature of 275 to 285°C during the polymerization.

In a preferred exemplary embodiment of the present invention, the titanium-based compound may include 10 to 20 ppm of titanium element based on the total weight of the polymerization reactants.

[Advantageous Effects]

Through the present invention, by including a titanium-based compound as a polymerization catalyst, it is possible to manufacture a polyester staple yarn for a wet non-woven fabric with excellent spinning workability and improved dispersibility, and to manufacture a wet non-woven fabric with uniform mechanical strength including the same.

[Modes of the Invention]

Hereinafter, the present invention will be described in more detail through a method for manufacturing a wet non-woven fabric.

The manufacturing method of a wet non-woven fabric according to the present invention may include Step 1 of manufacturing a handsheet by mixing a polyester staple yarn for a wet non-woven fabric and a binder staple yarn; Step 2 of manufacturing a paper sheet by drying the handsheet; and Step 3 of manufacturing a wet non-woven fabric by performing calendaring by applying at least one selected from heat and pressure to the paper sheet.

First of all, the polyester staple yarn of Step 1 may be manufactured by including Step 1-1 of obtaining an ester reaction product by reacting an acid component and a diol component; Step 1-2 of preparing a polyester resin by mixing and reacting polymerization reactants including the ester reaction product, a heat stabilizer and a titanium-based compound; Step 1-3 of preparing a spinning material by spinning the polyester resin; and Step 1-4 of manufacturing a polyester staple yarn by stretching the spinning material.

Specifically, the ester reaction of Step 1-1 may be carried out under esterification reaction conditions that are commonly used in the art, and in a preferred example, the ester reaction may be performed at a rotational speed of 40 to 80 rpm for 150 to 240 minutes under 200 to 260°C, and more preferable, it may be performed at a rotational speed of 50 to 70 rpm for 180 to 210 minutes under 210 to 250°C.

Meanwhile, the acid component and the diol component may be included at a molar ratio of 1 : 1.0 to 1 : 1.5, and preferably, at a molar ratio of 1 : 1.0 to 1 : 1.3. If the molar ratio of the diol component is less than 1.0, the acidity may be excessively increased during polymerization to promote side reactions, and if the molar ratio thereof is more than 1.5, the degree of polymerization may not increase.

In this case, the acid component may include terephthalic acid, and may further include an aromatic polyvalent carboxylic acid having 6 to 14 carbon atoms, an aliphatic polyhydric carboxylic acid having 2 to 14 carbon atoms and/or a sulfonic acid metal salt.

The aromatic polyhydric carboxylic acid having 6 to 14 carbon atoms may be used without limitation as an acid component used for the production of polyester, but may preferably be at least one selected from the group consisting of dimethyl terephthalate, isophthalic acid and dimethyl isophthalate.

In addition, the aliphatic polyhydric carboxylic acid having 2 to 14 carbon atoms may be used without limitation as an acid component used for the production of polyester, and as non-limiting examples thereof, it may be at least one selected from the group consisting of oxalic acid, malonic acid, succinic acid, glutaric acid, adipic acid, suberic acid, citric acid, pimeric acid, azelaic acid, sebacic acid, nonanoic acid, decanoic acid, dodecanoic acid and hexanodecanoic acid.

Meanwhile, the diol component may include ethylene glycol and a component represented by Chemical Formula 2 below.

[Chemical Formula 2]

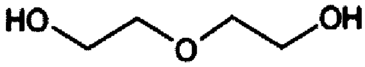

Next, the polymerization of Step 1-2 may be carried out by gradually increasing the temperature to a final temperature of 275 to 285°C while gradually reducing the pressure such that the final pressure becomes 0.5 torr, and preferably by increasing the temperature to a final temperature of 277 to 283°C.

If the final elevated temperature of the polymerization is less than 275°C or more than 285°C, the dispersibility of the fibers is excessively increased, the tensile strength of the non-woven fabric is lowered, and there may be problems in that the thickness uniformity of the non-woven fabric is poor, and the touch feeling of the surface of a non-woven fabric is poor.

Meanwhile, a general heat stabilizer used in the art may be used as the heat stabilizer, and preferably, one or two or more selected from trimethylphosphate, triethylphostphate, tributyl phosphate, tributoxyethyl phosphate, tricresyl phosphate, triarylphosphate isopropylated, hydroquinone bis-(diphenyl phosphate) may be mixed and used.

In addition, the heat stabilizer may be included in an amount of 10 to 30 ppm, and preferably, 15 to 25 ppm, based on the amount of phosphorus (P) element in the total weight of the polymerization product.

Meanwhile, a complementary colorant may be further included in the polymerization product. A mixture of blue and red dyes may be used as the complementary colorant, and the dyes may be characterized as being harmless to the human body by replacing the cobalt compound that induces pulmonary interstitial fibrosis and is classified as a human carcinogen.

In addition, the complementary colorant may be included in the polymerization reaction product in an amount of 1 to 10 ppm, and preferably, 3 to 7 ppm.

Meanwhile, the titanium-based compound may act as a polymerization catalyst, may be a titanium-based compound represented by Chemical Formula 1 below, and preferably may be a titanium chelate-based compound represented by Chemical Formula 1 below.

[Chemical Formula 1]

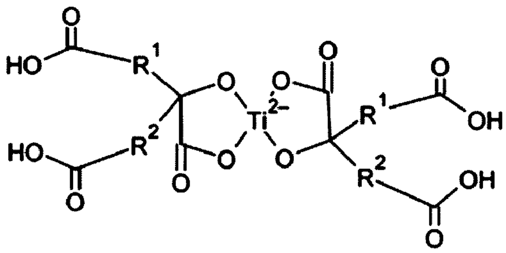

In Chemical Formula 1 above, $R^1$ and $R^2$ may each independently be a straight-chain alkylene group having 1 to 5 carbon atoms or a branched alkylene group having 3 to 5 carbon atoms, and preferably, a straight-chain alkylene group having 1 to 3 carbon atoms or a branched alkylene group having 3 to 4 carbon atoms.

In addition, since the titanium-based compound represented by Chemical Formula 1 is stable even in the presence of water molecules, it is not deactivated even if it is added before the ester reaction in which a large amount of water is produced as a by-product, and as a result, the ester reaction and polycondensation reaction may be performed in a shorter period of time compared to the related art, so as to suppress coloring. Furthermore, the titanium-based compound has excellent polymerization reactivity even at a low polymerization temperature, and the generation of a carboxyl group (-COOH) at the terminal of the polyester resin which is prepared by a relatively high degree of polymerization is reduced such that it is possible to reduce the contamination of a nozzle surface by the oligomer and monomer during the spinning process, and since the number of times the nozzle surface is cleaned can be reduced, there is an effect of improving the production yield and reducing the defect rate. In addition, through this, it is possible to prepare a human-friendly polymer with a reduced content of acetaldehyde.

In addition, the titanium-based compound may be included at 10 to 20 ppm based on titanium element in the total weight of the polymerization reaction product, and preferably, it may be included at 12 to 18 ppm, and more preferably, 14 to 16 ppm. If it is included at less than 10 ppm, the b value (b *) of the yarn becomes excessively high,

and the dyeability and dyeing rate of the fiber become poor, and as the amount of acetaldehyde generated increases, there may be problems in that it is impossible to prepare a human-friendly polymer. In addition, if it is included at more than 20 ppm, the occurrence of a carboxyl group (-COOH) at the terminal of the polyester resin may be excessively increased.

Meanwhile, in terms of manufacturing the polyester yarn of the present invention, a complementary colorant may be further included. The complementary colorant is used for adjusting the color tone to make the color of a colored dye stronger and better in the dyeing process which is performed after being spun into the yarn, and those that are well-known in the fiber field may be added, and non-limiting examples thereof include wear dyes, pigments, vat dyes, disperse dyes, organic pigments and the like. However, preferably, a mixture of blue and red dyes may be used. This is because a cobalt compound that is generally used as a complementary colorant is undesirable because it is harmful to the human body, whereas a complementary colorant mixed with blue and red dyes is harmless to the human body and is therefore preferred. In addition, when a mixture of blue and red dyes is used, there is an advantage in that the color tone can be finely controlled. The blue dye may include, for example, solvent blue 104, solvent blue 122, solvent blue 45 and the like, and the red dye may include, for example, solvent red 111, solvent red 179, solvent red 195 and the like. In addition, the blue dye and the red dye may be mixed at a weight ratio of 1 : 1.0 to 3.0, which is advantageous to express a remarkable effect on a desired fine color tone control.

The complementary colorant may be provided in an amount of 1 to 10 ppm based on the total weight of the polymerization reactants. If the amount is less than 1 ppm, it may be difficult to achieve a desired level of complementary color properties, and if it is more than 10 ppm, the L value decreases, and there may be a problem of deteriorating the transparency and exhibiting a dark color.

The polyester resin may have an intrinsic viscosity of 0.60 to 0.80 dL/g, preferably 0.63 to 0.77 dL/g.

In addition, the number of carboxyl groups measured by the PHOL method of the polyester resin may be 30 to 40, and preferably, 33 to 39.

Next, the spinning of Step 1-3 may be performed through a spinneret (nozzle), and the spinneret may preferably have a shape of o, and the spinning may be performed at a spinning rate of 1,300 to 1,700 mpm (meter per minute) under 270 to 300°C, and preferably, at a spinning rate of 1,400 to 1,600 mpm under 275 to 295°C.

Next, the stretching of Step 1-4 may be performed at a stretching ratio of 2.0 to 4.0, and preferably, at a stretching ratio of 2.5 to 3.5.

The polyester staple yarn for a wet non-woven fabric prepared above may be a fiber that implements the shape, strength and the like of a wet non-woven fabric as a base fiber of the wet non-woven fabric.

In addition, the polyester staple yarn includes a spinning material which is obtained by spinning a polymerization product, the polymerization product may be a reaction product obtained by polymerization of an ester reaction product, and the ester reaction product may be a reaction product obtained by reacting mixtures including an ester reaction product, a heat stabilizer and a titanium-based compound.

In addition, the polyester staple yarn may have a fineness of 0.3 to 3.0 de, and preferably, 0.4 to 1.5 de. If the fineness of the polyester staple yarn is less than 0.3 de, there may be a problem in that the spinnability may be poor, and if it is more than 3.0 de, the problem of excessively high air permeability may occur.

In addition, the polyester staple yarn may have an average fiber length of 3 to 12 mm, and preferably, 4 to 6 mm. If the average fiber length is less than 3 mm, the problem of excessively lowering strength among the physical properties of the nonwoven may occur, and if it is more than 12 mm, there may be a problem in that the occurrence of defects in papermaking including such a polyester staple yarn increases significantly.

In addition, the polyester staple yarns may have a dispersibility of 10 ppm or less, preferably, 0.1 to 8.0 ppm, and more preferably, 1.0 to 6.0 ppm, as measured by Relationship Formula 1 below.

[Relationship Formula 1]

$$\text{Dispersibility}(ppm) = \frac{\text{Number of undispersed fibers}(ca)}{\text{Total number of fibers}(ca)} \times 10^6$$

The number of undispersed fibers is determined by adding 3 g of a polyester staple yarn for a wet non-woven fabric having a moisture content of 25 wt.% to 1 L of water at a temperature of 25°C, stirring for 10 minutes under the condition of 600 rpm, leaving for 1 minute and then measuring the number of undispersed fibers.

If the dispensability according to Relationship Formula 1 is more than 10 ppm, the wet non-woven fabric manufactured by including such a polyester staple yarn has reduced mechanical strength uniformity, and the number of polyester staple yarns that are agglomerated when dispersed in water at a temperature of 25°C or higher is significantly increased, and the tactile feel of the non-woven fabric which is implemented through this may be reduced, and there is

a risk that the mechanical strength of the non-woven fabric may be deteriorated due to an increase in defects in the non-woven fabric. Meanwhile, when observed with the naked eye, the aesthetics and feel of a paper sheet are very important, and even to the degree that the water dispersibility changes in decimal units, the defects may significantly increase, and thus, the management of water dispersibility up to two (2) decimal places or less may be very important for the quality of the product.

Separately from the polyester staple yarn, the binder staple yarn is a fiber that is uniformly dispersed with the polyester staple yarn and thermally bonds between the polyester staple yarn, the binder staple yarn and/or the binder staple yarn itself, and it may also be used as a fiber that guarantees the shape implementation and mechanical strength of a wet non-woven fabric.

In addition, the binder staple yarn may include at least one selected from polyethylene terephthalate (PET) fiber and polybutylene terephthalate (PBT) fiber, and it may preferably be polyethylene terephthalate (PET) fiber.

Meanwhile, the binder staple yarn may be manufactured by including the steps of obtaining an ester reaction product by esterification reaction of an acid component and a diol component; preparing a polyester binder resin by polycondensation of the ester reaction product; and manufacturing a binder staple yarn by spinning the polyester binder resin.

When this process is specifically described, first of all, the acid component may be used without limitation as long as it is a known acid component, and preferably, it may include at least one selected from terephthalic acid (TPA), isophthalic acid (IPA) and arachidonic acid (AA), and more preferably, it may include at least one selected from terephthalic acid (TPA) and isophthalic acid (IPA).

Meanwhile, the diol component may be used without limitation as long as it is a known diol component, and preferably, it may include at least one selected from ethylene glycol (EG), poly(ethylene glycol) (PEG) and neopentyl glycol (NPG), and more preferably, it may include at least one selected from ethylene glycol (EG) and poly(ethylene glycol) (PEG).

Meanwhile, the acid component and the diol component may be included at a molar ratio of 1 : 1.0 to 1 : 1.5, and preferably, at a molar ratio of 1 : 1.0 to 1 : 1.3.

Next, the polymerization may be carried out by increasing the temperature to 275 to 285°C while gradually reducing the pressure such that the final pressure becomes 0.5 torr, and preferably, it may be carried out by increasing the temperature to 277 to 283°C.

The binder resin manufactured above may have an intrinsic viscosity of 0.60 to 0.80 dL/g, and preferably, 0.63 to 0.77 dL/g.

Next, the spinning may be performed through a spinneret (nozzle), and the spinneret may be preferably in the shape of a o, and the spinning may be performed at a spinning rate of 1,700 to 2,100 mpm (meter per minute) under 270 to 300°C, and preferably, it may be performed at a spinning rate of 1,800 to 2,000 mpm under 275 to 295°C.

The binder staple yarn manufactured above may be an undrawn yarn that has not been stretched through the stretching process.

In addition, the binder staple yarn may have a fineness of 0.5 to 3.0 de, and preferably, 0.8 to 1.8 de.

In addition, the binder staple yarn may have an average fiber length of 3 to 12 mm, and preferably, 4 to 6 mm.

Meanwhile, in the first step of producing a handsheet, the polyester staple yarn and the binder staple yarn manufactured above may be evenly dispersed in a dispersion medium, and the dispersion medium may be a known dispersion medium such as water and the like. The yarns mixed in the dispersion medium may be further subjected to a blending process for uniform mixing, and it may further include various other substances such as pH-adjusting substances, forming aids, surfactants, defoamers and the like to improve dispersibility.

In addition, the production of a handsheet may be manufactured by using a paper machine, and it can be used by changing the same according to the purpose, without being limited to the type of paper machine such as a long mesh paper machine, a round mesh paper machine and the like.

In this case, the binder staple yarn and the polyester staple yarn may be included at a weight ratio of 1 : 1.20 to 1 : 1.90, preferably, at a weight ratio of 1 : 1.30 to 1 : 1.80, and more preferably, at a weight ratio of 1 : 1.40 to 1 : 1.70. If the polyester staple yarn is included at less than a weight ratio of 1.20, there may be a problem in that the touch of the non-woven fabric becomes stiff, and if it is included at more than a weight ratio of 1.90, the problem of lowering the strength of the nonwoven fabric may occur.

Meanwhile, before the drying process of Step 2, it may be further subjected to a drainage process of the dispersion medium.

In addition, after the draining process, a dehydration process may be further performed by vacuum or other pressure. A paper sheet may be produced by evaporating the residual dispersion medium by using a dryer, oven or similar apparatus known in the art for drying for a handsheet that has undergone drainage and dehydration.

Next, the drying of Step 2 may be performed under 90 to 110°C, and preferably, it may be carried out under 95 to 105°C.

Next, the calendering of Step 3 may be performed by applying any one or more of heat and pressure to the

produced paper sheet, and the heat treatment may be performed under 210 to 270°C, and preferably, under 220 to 260°C.

Meanwhile, the preliminary compression step may be further performed before the calendering step, and the heat and/or pressure may be simultaneously performed by heating a roller and applying apply pressure, or may be performed through different processes. However, the heat treatment may be performed by any heating method, such as by bringing the paper into contact with a metal roll or other high-temperature surface, and it may also be achieved by a conventional method such as infrared or high-temperature air heating in an oven. Since the applied heat may be determined in consideration of the thermal characteristics of the polyester staple yarn and the binder staple yarn, the present invention is not particularly limited thereto.

The wet non-woven fabric manufactured above may have an average MD (machine direction) tensile strength of 150 to 300N/15 mm, and preferably, 150 to 200N/15 mm.

In addition, the non-woven fabric may be a staple yarn non-woven fabric.

In addition, the non-woven fabric may have a basis weight of 60 to 90 g/m$^2$, and preferably, 65 to 85 g/m$^2$.

In addition, the non-woven fabric may have an average thickness of 0.050 to 0.10 mm, and preferably, 0.070 to 0.090 mm.

In addition, the standard deviation of the MD (machine direction) tensile strengths of the non-woven fabric may satisfy Relationship Formula 2 below.

[Relationship Formula 2]

$$0.05N/15mm < \sqrt{\frac{\sum_{i=1}^{n}(l_i-\mu)^2}{N}} \leq 1.0N/15mm$$

In Relationship Formula 2 above, σ means the standard deviation, N is the number of regions obtained by dividing a specimen obtained by cutting the wet nonwoven fabric by 150 mm × 100 mm into N equal parts, N = 10, $l_i$ is the MD tensile strength of the central part of the i$^{th}$ region, and μ is the average value of MD tensile strengths of the region divided into N equal parts, and $\mu = \frac{1}{N}\sum_{i=1}^{n} l_i$.

In this case, the value of Relationship Formula 2 may be preferably 0.05 to 0.8 N/15 mm. If the value of Relationship Formula 2 is more than 1.0N/15 mm, the mechanical strength of the non-woven fabric may be uneven, and thus, there may be a problem in that it becomes difficult to be used as a product.

In addition, the non-woven fabric may be a wet non-woven fabric.

Paper and filter may be manufactured by including the wet non-woven fabric of the present invention in a predetermined shape, and the filter may preferably be a reverse osmosis filter.

The present invention will be described in more detail through the following examples, but the following examples are not intended to limit the scope of the present invention, which should be construed to aid understanding of the present invention.

**[Example]**

**Example 1-1: Manufacture of polyester staple yarn for wet non-woven fabric (1) Preparation of polyester resin**

100 mol% of terephthalic acid (TPA) as an acid component and 100 mol% of ethylene glycol (EG) as a diol component were added to an ester reactor, and then reacted under 250°C at a pressure of 1,140 torr to obtain an ester reaction product. In this case, the acid component and the diol component were introduced at a molar ratio of 1:1.2.

Then, the ester reaction product was transferred to a polycondensation reactor.

Then, a polyester resin was prepared by mixing and polymerizing the polymerization reaction product including the ester reaction product, a heat stabilizer and a titanium-based compound.

The polymerization reaction was carried out by increasing the temperature to a final temperature of 280°C while gradually reducing the pressure to a final pressure of 0.5 torr.

In this case, the heat stabilizer was prepared by including triethyl phosphoric acid in an amount of 25 ppm based on phosphorus element in the total weight of the polymerization product.

In addition, as the titanium-based compound, a compound represented by the Chemical Formula 1-1 below was used, and it was added so as to be 15 ppm based on titanium element in the total weight of the polymerization product, and it was included at 300 ppm in the total weight of the polymerization product.

[Chemical Formula 1-1]

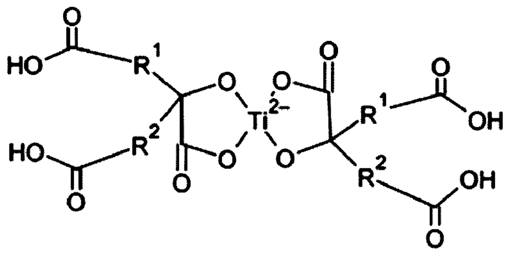

In Chemical Formula 1-1, $R^1$ and $R^2$ are each independently an alkyl group having 1 carbon atom.

**(2) Manufacture of polyester staple yarn**

The polyester resin was spun at a spinning rate of 1,500 ppm under 285° C through an o-shaped spinneret to manufacture a spinning material.

Then, a polyester staple yarn was manufactured by stretching the spinning material at a stretching ratio of 3.0.

In this case, the polyester staple yarn had an average fiber length of 5 mm and a fineness of 1.2 de.

**Example 1-2 to Example 1-9 and Comparative Example 1-1 to Comparative**

**Example 1-8: Manufacture of polyester staple yarns for wet non-woven fabric**

Polyester staple yarns were manufactured in the same manner as in Example 1-1, except that the polymerization temperature (final elevated temperature), the amount of a titanium-based compound added (based on Ti element), the fineness of the staple yarn or the average fiber length of the staple yarn was set as shown in Tables 1 to 3 below to perform Examples 1-2 to 1-9 and Comparative Example 1-1 to Comparative Manufacture Example 1-8.

**Comparative Examples 1-9 to Comparative Examples 1-12: Manufacture of polyester staple yarns for wet non-woven fabric**

Polyester staple yarns were manufactured in the same manner as in Example 1-1, except that the polymerization temperature (final elevated temperature), the type of polymerization catalyst or the amount of catalyst added (based on Ti element) was set as shown in Table 4 below to perform Comparative Example 1-9 to Comparative Examples 1-12.

**Example 2-1: Manufacture of binder staple yarn**

100 mol% of terephthalic acid (TPA) as an acid component and 100 mol% of ethylene glycol (EG) as a diol component were introduced into an ester reactor, and then reacted under 250°C at a pressure of 1,140 torr to obtain an ester reaction product. In this case, the acid component and the diol component were introduced at a molar ratio of 1 : 1.2.

Then, the ester reaction product was transferred to a polycondensation reactor.

Then, a polyester binder resin was prepared through a polycondensation reaction in which the temperature of the ester reaction product was increased to 280°C while gradually reducing the pressure to a final pressure of 0.5 torr.

Then, the polyester binder resin was spun through an o-shaped spinneret at a spinning rate of 1,900 ppm under 285°C to manufacture a binder staple yarn.

In this case, the polyester binder staple yarn had an average fiber length of 5 mm and a fineness of 1.2 de.

**Experimental Example 1: Evaluation of physical properties of polyester resins and polyester staple yarns**

The physical properties of the polyester resins (intermediate product) and polyester staple yarns for a wet non-woven fabric manufactured in Example 1-1 to Example 1-9 and Comparative Preparation Example 1-1 to Comparative

Preparation Example 1-12 were evaluated in the following manner, and the results are shown in Tables 1 to 4 below.

**(1) Intrinsic viscosity (IV)**

Polyester resin was melted at a concentration of 2.0 g/25 mL in the Ortho-Chloro Phenol solvent under 110°C for 30 minutes, and then kept at 25°C for 30 minutes to measure the intrinsic viscosity by using an automatic viscosity measurement device which was connected to a CANON viscometer.

**(2) Quantification of carboxyl group terminal groups**

The number of carboxyl groups of the polyester resin was measured according to the method of PHOL. Specifically, 0.1250 g of the polymerization product powder which was pulverized to a size of 20 mesh was precisely weighed and placed into a test tube, 5 mL of benzyl alcohol was added thereto, and it was stirred with a micro stirrer while heating and dissolving under 210°C for about 135 seconds. Immediately after dissolution, the test tube was immersed in water at 25°C for 6 seconds to rapidly cool, and the contents were poured into a 50 mL beaker containing 10 mL of chloroform. Afterwards, 5 mL of benzyl alcohol was added to the test tube, stirred for 60 seconds, and the remaining resin solution was completely rinsed and immediately added to a beaker, which was used as the titration solution. The carboxyl group content was neutralized and titrated with phenol red (0.1% benzyl alcohol solution) as an indicator and 0.1 N sodium hydroxide benzyl alcohol solution by using a microsyringe (mycrosyringe, 100 μL capacity), and the titration determination value was corrected according to the blank test result for the titration reagent and calculated according to Relationship Formula 3 below.

[Relationship Formula 3]

$$\text{Number of carboxyl groups(cq./}10^6\text{g Polymerization product)} = \frac{[\text{Volume of titrant}(\mu\ell)\text{-Blank test result}(\mu\ell)\ \times 0.1 \times f]}{\text{Weight of polymerization product specimen}}$$

In this case, *f* is the concentration coefficient of a 0.1N sodium hydroxide benzyl alcohol solution.

**(3) Evaluation of spinning workability**

For spinning workability, the number of drips (meaning a lump formed by partially fusion of the fiber strands passing through the spinneret or irregular fusion of the strands after trimming) during the spinning processing of polyester staple yarns was counted through a drip detector, and based on the number of drip occurrences in Example 1-1 as 100, the number of drips generated in the other examples and comparative examples was expressed as a relative percentage.

**(4) Measurement of wiping cycle (number of times)**

In the manufacturing process of polyester staple yarns, it was calculated how many times a spinneret was wiped per day. As the value of the wiping cycle increased, it was determined that the spinneret was contaminated with foreign matter.

**(5) Measurement of b value (b *)**

The color of the polyester staple yarns was analyzed through a colorimeter to measure the b value. The measurement method was based on spectroscopy, and the method of calculating chromaticity coordinates by using the CIE standard light source and standard observer was used.

**(6) Measurement of dispersibility**

Dispersibility was calculated according to Relationship Formula 1 below.

[Relationship Formula 1]

$$\text{Dispersibility}(ppm) = \frac{\text{Number of undispersed fibers}(ca)}{\text{Total number of fibers}(ca)} \times 10^6$$

The number of undispersed fibers is determined by adding 3 g of a polyester staple yarn for a wet non-woven fabric having a moisture content of 25 wt.% to 1 L of water at a temperature of 25°C, stirring for 10 minutes under the condition of 600 rpm, leaving for 1 minute and then measuring the number of undispersed fibers.

In this case, it was determined that as the dispersibility was higher, the number of undispersed fibers was greater, and it was determined to be poor.

[Table 1]

| Classification | | | Example 1-1 | Example 1-2 | Example 1-3 | Example 1-4 | Example 1-5 | Example 1-6 |
|---|---|---|---|---|---|---|---|---|
| Manufacturing process | Catalyst | Type | Chemical Formula 1-1 | Chemical Formula 1-1 | Chemical Formula 1-1 | Chemical Formula 1-1 | Chemical Formula 1-1 | Chemical Formula 1-1 |
| | | Content based on Ti element (ppm) | 15 | 15 | 15 | 10 | 20 | 15 |
| | Polymerization temperature (°C) | | 280 | 275 | 285 | 280 | 280 | 280 |
| Resin | IV (dL/g) | | 0.64 | 0.62 | 0.64 | 0.60 | 0.64 | 0.64 |
| | Carboxyl group (ea) | | 33 | 35 | 37 | 33 | 39 | 33 |
| Staple yarn | Fineness (de) | | 1.2 | 1.2 | 1.2 | 1.2 | 1.2 | 0.3 |
| | Average fiber length (mm) | | 5 | 5 | 5 | 5 | 5 | 5 |
| | Spinning workability (%) | | 100 | 100 | 100 | 100 | 100 | 110 |
| | Wiping cycle (times/day) | | 1 | 1 | 2 | 1 | 2 | 3 |
| | b* | | 4.2 | 4.3 | 5.1 | 4.3 | 4.0 | 4.2 |
| | Dispersibility (ppm) | | 5.4 | 6.8 | 8.6 | 9.2 | 9.8 | 4.9 |

[Table 2]

| Classification | | | Example 1-7 | Example 1-8 | Example 1-9 | Comparativ e Example 1-1 | Comparative Example 1-2 | Comparativ e Example 1-3 |
|---|---|---|---|---|---|---|---|---|
| Manufa cturing process | Catal yst | Type | Chemical Formula 1-1 | Chemical Formula 1-1 | Chemical Formula 1-1 | Chemical Formula 1-1 | Chemical Formula 1-1 | Chemical Formula 1-1 |
| | | Content based on Ti element (ppm) | 15 | 15 | 15 | 15 | 15 | 5 |
| | Polymerization temperature (°C) | | 280 | 280 | 280 | 270 | 290 | 280 |
| Resin | IV (dL/g) | | 0.64 | 0.64 | 0.64 | 0.61 | 0.64 | 0.54 |
| | Carboxyl group (ea) | | 33 | 33 | 33 | 40 | 49 | 31 |
| Staple yarn | Fineness (de) | | 3.0 | 1.2 | 1.2 | 1.2 | 1.2 | 1.2 |
| | Average fiber length (mm) | | 5 | 3 | 12 | 5 | 5 | 5 |
| | Spinning workability (%) | | 85 | 100 | 100 | 100 | 100 | 100 |
| | Wiping cycle (times/day) | | 1 | 1 | 1 | 2 | 6 | 1 |
| | b* | | 4.2 | 4.2 | 4.2 | 4.5 | 6.2 | 5.9 |
| | Dispersibility (ppm) | | 6.9 | 5.1 | 7.5 | 10.5 | 37.9 | 11.3 |

[Table 3]

| Classification | | | Comparative Example 1-4 | Comparative Example 1-5 | Comparative Example 1-6 | Comparative Example 1-7 | Comparative Example 1-8 |
|---|---|---|---|---|---|---|---|
| Manufa cturing process | Cataly st | Type | Chemical Formula 1-1 | Chemical Formula 1-1 | Chemical Formula 1-1 | Chemical Formula 1-1 | Chemical Formula 1-1 |
| | | Content based on Ti element (ppm) | 25 | 15 | 15 | 15 | 15 |
| | Polymerization temperature (°C) | | 280 | 280 | 280 | 280 | 280 |
| Resin | IV (dL/g) | | 0.66 | 0.64 | 0.64 | 0.64 | 0.64 |
| | Carboxyl group (ea) | | 45 | 33 | 33 | 33 | 33 |
| Staple yarn | Fineness (de) | | 1.2 | 0.1 | 3.2 | 1.2 | 1.2 |
| | Average fiber length (mm) | | 5 | 5 | 5 | 2 | 13 |
| | Spinning workability (%) | | 80 | 215 | 80 | 100 | 100 |
| | Wiping cycle (times/day) | | 5 | 9 | 1 | 1 | 1 |
| | b* | | 3.9 | 4.2 | 4.2 | 4.2 | 4.2 |
| | Dispersibility (ppm) | | 16.9 | 4.5 | 7.6 | 4.9 | 8.1 |

[Table 4]

| Classification | | | Comparative Example 1-9 | Comparative Example 1-10 | Comparative Example 1-11 | Comparative Example 1-12 |
|---|---|---|---|---|---|---|
| Man ufact urin g proc ess | Catal yst | Type | Antimony Trioxide | Antimony Trioxide | Antimony Trioxide | Antimony Trioxide |
| | | Content based on Ti element (ppm) | 15 | 20 | 20 | 25 |
| | Polymerization temperature (°C) | | 290 | 290 | 300 | 290 |
| Resi n | IV (dL/g) | | 0.59 | 0.64 | 0.68 | 0.67 |
| | Carboxyl group (ea) | | 65 | 63 | 80 | 67 |
| Staple yarn | Fineness (de) | | 1.2 | 1.2 | 1.2 | 1.2 |
| | Average fiber length (mm) | | 5 | 5 | 5 | 5 |
| | Spinning workability (%) | | 100 | 100 | 100 | 100 |
| | Wiping cycle (times/day) | | 6 | 5 | 7 | 6 |
| | b* | | 5.8 | 5.5 | 9.1 | 6.1 |
| | Dispersibility (ppm) | | 35.3 | 19.6 | 45.8 | 40.5 |

Looking at Tables 1 to 4 above, it was found that Examples 1-1 to 1-9 had excellent physical properties. On

the other hand, in Comparative Example 1-1 having a final elevated temperature (polymerization temperature) of less than 275°C, there was a problem in that the dispersibility exceeded 10 ppm when compared with Example 1-2 in which the final elevated temperature (polymerization temperature) was 275°C.

In addition, when Comparative Example 1-2 in which the final elevated temperature (polymerization temperature) was more than 285°C is compared with Example 1-3 in which the final elevated temperature (polymerization temperature) was 285°C, 40 or more carboxyl groups were measured in the resin, which indicated that the contamination was high, and the dispersibility of the fibers was significantly increased, and there was a problem in that the wiping cycle was shortened due to the easy contamination of the spinneret. In addition, it was found that the b value (b*) was high, and the yarn was yellowish.

In addition, when Comparative Examples 1-3 in which the titanium (Ti) element reference content of the titanium-based compound was less than 10 ppm is compared with Examples 1-4 in which the titanium (Ti) element reference content of the titanium-based compound was 10 ppm, it was found that the b value was excessively high, and the commercial use of the non-woven fabric was impossible, and the dispersibility also exceeded 10 ppm.

In addition, when Comparative Examples 1-4 in which the titanium (Ti) element reference content of the titanium-based compound was more than 20 ppm is compared with Examples 1-5 in which the titanium (Ti) element reference content of the titanium-based compound was 20 ppm, it was found that the carboxyl groups of the resin were measured excessively, the number of wiping due to contamination increased remarkably, and the dispersibility was excessively high.

In addition, when Comparative Examples 1-5 in which the fineness of the polyester staple yarn was less than 0.3 de is compared with Example 1-6 in which the fineness thereof was 0.3 de, the wiping cycle was found to be the most frequent, which was predicted to be a problem caused by excessive fineness.

Further, in Comparative Examples 1-9 to Comparative Examples 1-12 in which an antimony-based catalyst was used instead of a titanium-based compound, an excessive amount of carboxyl groups was detected, and also, it was confirmed that as the dispersibility was excessively high, it could not be used as a wet non-woven fabric.

**Manufacture Example 1: Manufacture of wet non-woven fabric**

The polyester staple yarn for a wet non-woven fabric manufactured in Example 1-1 and the binder staple yarn manufactured in Example 2-1 were prepared.

Then, after dispersing the binder staple yarn and polyester staple yarn in water at a weight ratio of 1 : 1.50, draining the water, drying under 100°C and calendering under 240°C, a wet non-woven fabric having a basis weight of 75 g/m$^2$ and an average thickness of 0.08 mm was manufactured.

**Manufacture Example 2 to Manufacture Example 11 and Comparative Manufacture Example 1 to Comparative Manufacture Example 14: Manufacture of wet non-woven fabrics**

Wet non-woven fabrics were manufactured in the same manner as in Manufacture Example 1, except that the polyester staple yarns for a wet non-woven fabric manufactured in Examples 1-2 to 1-9 or Comparative Examples 1-1 to 1-12 were used, or the weight ratio of the binder staple yarn and the polyester staple yarn was set as shown in Tables 5 to 9 below to perform Manufacture Examples 2 to 11 and Comparative Manufacture Example 1 to Comparative Manufacture Example 14.

**Experimental Example 2: Evaluation of physical properties of wet non-woven fabrics**

Specimens were prepared by cutting the wet non-woven fabrics manufactured in Manufacture Examples 1 to 11 and Comparative Manufacture Examples 1 to 14 to 150 mm × 100 mm. In addition, the test was performed on the specimens in the following way, and the results are shown in Tables 5 to 9 below.

**(1) Measurement of average of MD (Machine direction) tensile strengths**

For MD tensile strength, the specimen was tested 10 times at a temperature of 25°C and at a speed of 20 mm/min through a tensile strength tester (HZ-1007E, MMS), and the average value was taken as the average tensile strength.

**(2) Measurement of standard deviation of MD (Machine direction) tensile strength**

The standard deviation of MD tensile strengths was calculated by Relationship Formula 2-1 below.

[Relationship Formula 2-1]

$$0.05N/15mm < \sqrt{\frac{\sum_{i=1}^{n}(l_i-\mu)^2}{N}} \leq 1.0N/15mm$$

In Relational Formula 2-1 above, $\alpha$ means the standard deviation, N is the number of regions obtained by dividing a specimen obtained by cutting the wet nonwoven fabric by 150 mm × 100 mm into N equal parts, N = 10, $l_i$ is the MD tensile strength of the central part of the $i^{th}$ region, and $\mu$ is the average value of MD tensile strengths of the region divided into N equal parts, and $\mu = \frac{1}{N}\sum_{i=1}^{n} l_i$.

**(3) Surface touch (tactile) evaluation**

The sensory evaluation was performed by 8 panelists by hand feeling, and relative evaluation was performed as follows. (1: very soft, 2: medium, 3: stiff or rough)

[Table 5]

| Classification | | | Manufacture Example 1 | Manufacture Example 2 | Manufacture Example 3 | Manufacture Example 4 | Manufacture Example 5 |
|---|---|---|---|---|---|---|---|
| Polyester staple yarn | | | Example 1-1 | Example 1-2 | Example 1-3 | Example 1-4 | Example 1-5 |
| Binder staple yarn | | | Example 2-1 | Example 2-1 | Example 2-1 | Example 2-1 | Example 2-1 |
| Weight ratio (Binder staple yarn: Staple yarn) | | | 1:1.50 | 1:1.50 | 1:1.50 | 1:1.50 | 1:1.50 |
| Nonwove n fabric | MD tensile strength (N/ 15mm) | Average | 156 | 153 | 150 | 154 | 150 |
| | | Standard deviation | 0.08 | 0.52 | 0.73 | 0.86 | 0.94 |
| | Touch feeling | | 1 | 1 | 1 | 2 | 2 |

[Table 6]

| Classification | | | Manufacture Example 6 | Manufacture Example 7 | Manufacture Example 8 | Manufacture Example 9 | Manufacture Example 10 |
|---|---|---|---|---|---|---|---|
| Polyester staple yarn | | | Example 1-6 | Example 1-7 | Example 1-8 | Example 1-9 | Example 1-1 |
| Binder staple yarn | | | Example 2-1 | Example 2-1 | Example 2-1 | Example 2-1 | Example 2-1 |
| Weight ratio (Binder staple yarn: Staple yarn) | | | 1:1.50 | 1:1.50 | 1:1.50 | 1:1.50 | 1:1.20 |
| Nonwoven fabric | MD tensile strength (N/ 15mm) | Average | 161 | 150 | 151 | 160 | 159 |
| | | Standard deviation | 0.15 | 0.11 | 0.11 | 0.14 | 0.12 |
| | Touch feeling | | 1 | 1 | 1 | 2 | 2 |

[Table 7]

| Classification | | | Manufacture Example 11 | Comparative Manufacture Example 1 | Comparative Manufacture Example 2 | Comparative Manufacture Example 3 | Comparative Manufacture Example 4 |
|---|---|---|---|---|---|---|---|
| Polyester staple yarn | | | Example 1-1 | Comparative Example 1-1 | Comparative Example 1-2 | Comparative Example 1-3 | Comparative Example 1-4 |
| Binder staple yarn | | | Example 2-1 | Example 2-1 | Example 2-1 | Example 2-1 | Example 2-1 |
| Weight ratio (Binder staple yarn: Staple yarn) | | | 1:1.90 | 1:1.50 | 1:1.50 | 1:1.50 | 1:1.50 |
| Nonwoven fabric | MD tensile strength (N/ 15mm) | Average | 152 | 148 | 132 | 143 | 139 |
| | | Standard deviation | 0.13 | 1.01 | 1.75 | 1.06 | 1.23 |
| | Touch feeling | | 1 | 3 | 3 | 3 | 3 |

[Table 8]

| Classification | | | Comparative Manufacture Example 5 | Comparative Manufacture Example 6 | Comparative Manufacture Example 7 | Comparative Manufacture Example 8 | Comparative Manufacture Example 9 |
|---|---|---|---|---|---|---|---|
| Polyester staple yarn | | | Comparative Example 1-5 | Comparative Example 1-6 | Comparative Example 1-7 | Comparative Example 1-8 | Comparative Example 1-9 |
| Binder staple yarn | | | Example 2-1 | Example 2-1 | Example 2-1 | Example 2-1 | Example 2-1 |
| Weight ratio (Binder staple yarn: Staple yarn) | | | 1:1.50 | 1:1.50 | 1:1.50 | 1:1.50 | 1:1.50 |
| Nonwoven fabric | MD tensile strength (N/ 15mm) | Average | 166 | 139 | 136 | 165 | 140 |
| | | Standard deviation | 0.16 | 0.09 | 0.13 | 0.13 | 0.32 |
| | Touch feeling | | 1 | 2 | 1 | 2 | 3 |

[Table 9]

| Classification | | | Comparative Manufacture Example 10 | Comparative Manufacture Example 11 | Comparative Manufacture Example 12 | Comparative Manufacture Example 13 | Comparative Manufacture Example 14 |
|---|---|---|---|---|---|---|---|
| Polyester staple yarn | | | Comparative Example 1-10 | Comparative Example 1-11 | Comparative Example 1-12 | Example 1-1 | Example 1-1 |
| Binder staple yarn | | | Example 2-1 | Example 2-1 | Example 2-1 | Example 2-1 | Example 2-1 |
| Weight ratio (Binder staple yarn: Staple yarn) | | | 1:1.50 | 1:1.50 | 1:1.50 | 1:1.10 | 1:2.00 |
| Nonwoven fabric | MD tensile strength (N/15mm) | Average | 140 | 132 | 142 | 164 | 144 |
| | | Standard deviation | 0.32 | 0.29 | 0.46 | 0.11 | 0.13 |
| | Touch feeling | | 3 | 3 | 3 | 3 | 1 |

Looking at Tables 5 to 9, it was found that Manufacture Examples 1 to 11 were non-woven fabrics having excellent physical properties. On the other hand, it was found that in Comparative Manufacture Examples 1 to 14, the tensile strength of the non-woven fabric was less than 150N/15 mm, the standard deviation of the tensile strengths was more than 1.0N/15 mm, or the touch feeling on the surface of the nonwoven fabric was poor.

Although an exemplary embodiment of the present invention has been described above, the spirit of the present invention is not limited to the exemplary embodiments presented herein, and a person skilled in the art who understands the spirit of the present invention may easily suggest other exemplary embodiments by modifying, changing, deleting or adding components within the scope of the same spirit, but this will also fall within the spirit of the present invention.

## Claims

1. A polyester staple yarn for a wet non-woven fabric, which has a fineness of 0.3 to 3.0 de and a dispersibility of 10 ppm or less as measured by Relationship Formula 1 below:

[Relationship Formula 1]

$$\text{Dispersibility}(ppm) = \frac{\text{Number of undispersed fibers}(ca)}{\text{Total number of fibers}(ca)} \times 10^6$$

wherein in Relationship Formula 1 above, the number of undispersed fibers is determined by adding 3 g of a polyester staple yarn for a wet non-woven fabric having a moisture content of 25 wt.% to 1 L of water at a temperature of 25°C, stirring for 10 minutes under the condition of 600 rpm, leaving for 1 minute and then measuring the number of undispersed fibers.

2. The polyester staple yarn of claim 1, wherein the polyester staple yarn comprises a spinning material in which a polymerization product is spun, and

wherein the polymerization product is a reaction product obtained by polymerization of an ester reaction product, and the ester reaction product is a reaction product obtained by reacting a mixture including an ester reaction product, a thermal stabilizer and a titanium-based compound represented by Chemical Formula 1 below:

[Chemical Formula 1]

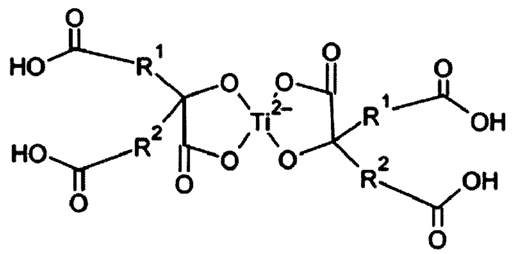

wherein in Chemical Formula 1 above, $R^1$ and $R^2$ are each independently a straight-chain alkylene group having 1 to 5 carbon atoms or a branched alkylene group having 3 to 5 carbon atoms.

3. The polyester staple yarn of claim 1, wherein the polyester staple yarn has an average fiber length of 3 to 12 mm.

4. A wet non-woven fabric, comprising:

the polyester staple yarn for a non-woven fabric according to any one of claims 1 to 3; and
a binder staple yarn,
wherein the binder staple yarn and the polyester staple yarn are comprised at a weight ratio of 1 : 1.20 to 1 : 1.90.

5. The wet non-woven fabric of claim 4, wherein the wet non-woven fabric has an MD (machine direction) tensile strength of 150 to 300 N/15 mm.

6. The wet non-woven fabric of claim 4, wherein the standard deviation of the MD (machine direction) tensile strengths of the wet non-woven fabric satisfies Relationship Formula 2 below:

[Relationship Formula 2]

$$0.05N/15mm < \sqrt{\frac{\sum_{i=1}^{n}(l_i-\mu)^2}{N}} \leq 1.0N/15mm$$

wherein in Relationship Formula 2 above, N is the number of regions obtained by dividing a specimen obtained by cutting the wet non-woven fabric by 150 mm × 100 mm into N equal parts, N = 10, $l_i$ is the MD tensile strength of the central part of the $i^{th}$ region, and $\mu$ is the average value of MD tensile strengths of the region divided into N equal parts, and $\mu=\frac{1}{N}\sum_{i=1}^{n}l_i$.

7. The wet non-woven fabric of claim 4, wherein the binder staple yarn has a fineness of 0.3 to 3.0 de and an average fiber length of 3 to 12 mm.

8. A method for manufacturing a wet non-woven fabric, comprising:

Step 1 of manufacturing a handsheet by mixing a polyester staple yarn for a wet non-woven fabric and a binder staple yarn;
Step 2 of manufacturing a paper sheet by drying the handsheet; and
Step 3 of manufacturing a wet non-woven fabric by performing calendaring by applying at least one selected from heat and pressure to the paper sheet,
wherein the polyester staple yarn is manufactured by comprising:

Step 1-1 of obtaining an ester reaction product by reacting an acid component and a diol component;
Step 1-2 of preparing a polyester resin by mixing and reacting polymerization reactants including the ester reaction product, a heat stabilizer and a titanium-based compound;
Step 1-3 of preparing a spinning material by spinning the polyester resin; and
Step 1-4 of manufacturing a polyester staple yarn by stretching the spinning material.

9. The method of claim 8, wherein the temperature is increased to a final temperature of 275 to 285° during the polymerization.

10. The method of claim 8, wherein the titanium-based compound includes 10 to 20 ppm of titanium element based on the total weight of the polymerization reactants.

**INTERNATIONAL SEARCH REPORT**

International application No.
**PCT/KR2021/014312**

**A. CLASSIFICATION OF SUBJECT MATTER**

**D01F 6/62**(2006.01)i; **D01F 1/10**(2006.01)i; **D04H 1/55**(2012.01)i

According to International Patent Classification (IPC) or to both national classification and IPC

**B. FIELDS SEARCHED**

Minimum documentation searched (classification system followed by classification symbols)

D01F 6/62(2006.01); B68G 7/02(2006.01); D01D 5/24(2006.01); D01D 5/32(2006.01); D01F 6/84(2006.01); D04H 1/425(2012.01); D04H 1/435(2012.01); D04H 1/4391(2012.01); D04H 1/541(2012.01); D21H 13/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Capuls), PubChem, Google & keywords: 습식 부직포 (wet-laid nonwoven fabric), 섬도 (fineness), 폴리에스테르 단섬유 (polyester short fiber), 분산성 (dispersibility)

**C. DOCUMENTS CONSIDERED TO BE RELEVANT**

| Category* | Citation of document, with indication, where appropriate, of the relevant passages | Relevant to claim No. |
|---|---|---|
| X | KR 10-2005-0096122 A (TEIJIN FIBERS LIMITED) 05 October 2005 (2005-10-05) See paragraphs [0154], [0157], [0158], [0208], [0232]-[0235] and [0250]; table 1; and example 1. | 1,3-10 |
| Y | | 2 |
| Y | JP 2004-323990 A (TORAY IND. INC.) 18 November 2004 (2004-11-18) See paragraph [0071]; and claim 1. | 2 |
| X | JP 2012-017543 A (NIPPON ESTER CO., LTD.) 26 January 2012 (2012-01-26) See paragraphs [0016]-[0029] and [0040]. | 1,3-7 |
| A | KR 10-2017-0015717 A (HUVIS CORPORATION) 09 February 2017 (2017-02-09) See entire document. | 1-10 |
| A | KR 10-2016-0079347 A (TORAY CHEMICAL KOREA INC.) 06 July 2016 (2016-07-06) See entire document. | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 January 2022** | **28 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2021/014312**

| **C. DOCUMENTS CONSIDERED TO BE RELEVANT** | | |
|---|---|---|
| Category* | Citation of document, with indication, where appropriate, of the relevant passages | Relevant to claim No. |
| PX | KR 10-2021-0084091 A (TORAY ADVANCED MATERIALS KOREA INC.) 07 July 2021 (2021-07-07) See paragraphs [0004], [0013], [0124]-[0136] and [0191]; examples 5-7; and claims 1-7. | 1-4 |

Form PCT/ISA/210 (second sheet) (July 2019)

**INTERNATIONAL SEARCH REPORT**
**Information on patent family members**

International application No.
**PCT/KR2021/014312**

| Patent document cited in search report | | | Publication date (day/month/year) | Patent family member(s) | | | Publication date (day/month/year) |
|---|---|---|---|---|---|---|---|
| KR | 10-2005-0096122 | A | 05 October 2005 | AT | 502146 | T | 15 April 2011 |
| | | | | AU | 2004-292812 | A1 | 29 July 2004 |
| | | | | CA | 2512787 | A1 | 22 July 2004 |
| | | | | CA | 2512787 | C | 17 January 2012 |
| | | | | CN | 1756866 | A | 05 April 2006 |
| | | | | EP | 1584723 | A1 | 12 October 2005 |
| | | | | EP | 1584723 | A4 | 16 August 2006 |
| | | | | EP | 1584723 | B1 | 16 March 2011 |
| | | | | ES | 2363082 | T3 | 20 July 2011 |
| | | | | JP | 2004-211251 | A | 29 July 2004 |
| | | | | JP | 2004-211270 | A | 29 July 2004 |
| | | | | JP | 2004-218094 | A | 05 August 2004 |
| | | | | JP | 2004-267597 | A | 30 September 2004 |
| | | | | JP | 2004-270069 | A | 30 September 2004 |
| | | | | JP | 2004-270098 | A | 30 September 2004 |
| | | | | KR | 10-1077812 | B1 | 28 October 2011 |
| | | | | MX | PA05007108 | A | 26 August 2005 |
| | | | | NZ | 541157 | A | 30 April 2008 |
| | | | | RU | 2005125049 | A | 20 January 2006 |
| | | | | RU | 2301855 | C2 | 27 June 2007 |
| | | | | TW | 200419026 | A | 01 October 2004 |
| | | | | US | 2006-0057373 | A1 | 16 March 2006 |
| | | | | WO | 2004-061180 | A1 | 22 July 2004 |
| | | | | WO | 2004-061180 | A9 | 01 September 2005 |
| JP | 2004-323990 | A | 18 November 2004 | JP | 4411859 | B2 | 10 February 2010 |
| JP | 2012-017543 | A | 26 January 2012 | JP | 5421199 | B2 | 19 February 2014 |
| KR | 10-2017-0015717 | A | 09 February 2017 | KR | 10-1741127 | B1 | 31 May 2017 |
| KR | 10-2016-0079347 | A | 06 July 2016 | | None | | |
| KR | 10-2021-0084091 | A | 07 July 2021 | WO | 2021-133114 | A1 | 01 July 2021 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002194618 A